# EUROPÄISCHE PATENTANMELDUNG

(11) **EP 1 283 650 A1**
(43) Veröffentlichungstag der Anmeldung: **12.02.2003**
(21) Anmeldenummer: 01126315.9
(22) Anmeldetag: 06.11.2001
(51) Int. Cl.: H04Q 7/38

(54) **Verfahren, Sende-/Empfangseinheit und Kommunikationssystem zur Übertragung von Daten von einem Versender an mehrere Empfänger**

(30) Priorität: 07.08.2001 EP 01710039
(71) Anmelder: SIEMENS AKTIENGESELLSCHAFT, 80333 München (DE)
(72) Erfinder: Beckmann, Mark, 38102 Braunschweig (DE); Eckert, Michael, 38122 Braunschweig (DE); Gottschalk, Thomas, 12524 Berlin (DE); Hans, Martin, 31141 Hildesheim (DE); Otte, Andreas, 29227 Celle (DE); Schwagmann, Norbert, 26892 Lehe (DE)

(57) **Zusammenfassung**

Die vorliegende Erfindung betrifft ein Verfahren zur Übertragung von Daten von einem Versender an mehrere Empfänger in einem System mit einer mehrschichtigen Protokollarchitektur, in der die Daten zur Organisation in Datenpakete aus Kopfdaten und Nutzdaten aufgeteilt werden, eine Sende- und/oder Empfangseinheit und ein Kommunikationssystem.

Um ein Verfahren, eine Sende- und/oder Empfangseinheit und ein Kommunikationssystem zu schaffen, die ohne wesentlichen zusätzlichen Verwaltungsaufwand einen Versand von Nachrichten gezielt an eine Gruppe von Empfängern bei geringem Bedarf an Übertragungsbandbreite ermöglichen, wird vorgeschlagen, daß die Übertragung von Daten in Form einer Punkt-zu-Mehrpunkt-Übertragung über einen allgemeinen Kanal insbesondere in einem Mobilfunksystem durchgeführt wird, indem zu Paketdaten, die an Multicast-Gruppen gesendet werden, Kontrolldaten zur Identifizierung einer bestimmten Multicast-Gruppe hinzugefügt werden.

## Beschreibung

Die vorliegende Erfindung betrifft ein Verfahren zur Übertragung von Daten von einem Versender an mehrere Empfänger in einem System mit einer mehrschichtigen Protokollarchitektur, in der die Daten zur Organisation in Datenpakete aus Kopfdaten und Nutzdaten aufgeteilt werden, eine Sende- und/oder Empfangseinheit und ein Kommunikationssystem.

Unter dem Begriff der Daten wird im Rahmen der vorliegenden Erfindung neben jeder Form von Information und/oder Nachricht auch eine im wesentlichen werbende oder ohne Aufforderung übersandte Information verstanden, insbesondere also ein Angebot, eine Werbeanzeige oder Werbung für ein Produktneuheit und Verbraucherinformation in sonstiger Form.

Bei vielen in bekannten modernen Kommunikationssystemen angebotenen Diensten und Anwendungen sollen Informationen nicht nur zu einem, sondern zu zwei und mehreren Mobilfunkteilnehmern übertragen werden. Beispiele für solche Dienste und Anwendungen sind News-Groups im Internet, Video-Konferenzen, Video-On-Demand, verteilte Anwendungen und vieles mehr. Bei der Übertragung der Nachrichten zu den verschiedenen Teilnehmern ist es möglich, jedem Empfänger separat eine Kopie der Daten zuzusenden. Diese Technik ist zwar unter Verwendung s.g. Unicast-Verbindungen einfach zu implementieren, für große Gruppen jedoch ungeeignet. Da dieselbe Nachricht bei einem Versand an N Empfänger im wesentlichen über N Einzelverbindungen übertragen wird und dabei mehrfach über gemeinsame Verbindungswege gesendet wird, benötigt dieses Verfahren eine sehr hohe Bandbreite.

Der vorliegenden Erfindung liegt die Aufgabe zugrunde, ein Verfahren, eine Sende- und/oder Empfangseinheit und ein Kommunikationssystem zu schaffen, die ohne wesentlichen zusätzlichen Verwaltungsaufwand einen Versand von Nachrichten gezielt an eine Gruppe von Empfängern bei geringem Bedarf an Übertragungsbandbreite ermöglichen.

Diese Aufgabe wird erfindungsgemäß durch ein Verfahren mit den Merkmalen des Anspruchs 1 und eine Sende- und/oder Empfangseinheit mit den Merkmalen des Anspruchs 10 gelöst. Ferner ist ein Kommunikationssystem mit den Merkmalen von Anspruch 11 eine Lösung dieser Aufgabe. Die Unteransprüche definieren jeweils bevorzugte und vorteilhafte Ausführungsformen der vorliegenden Erfindung.

Ein erfindungsgemäßes Verfahren zeichnet sich dadurch aus, daß die Übertragung von Daten in Form einer Punkt-zu-Mehrpunkt-Übertragung insbesondere in einem Mobilfunksystem durchgeführt wird, indem zu Paketdaten, die an Multicast-Gruppen gesendet werden, Kontrolldaten zur Identifizierung einer bestimmten Multicast-Gruppe hinzugefügt werden. Es wird damit erfindungsgemäß eine Nachrichtensendung, die nur für eine bestimmte Gruppe bestimmt ist, zur Schonung von Systemressourcen nur einmal übertragen. Der Übertragungsweg über einen allgemeinen Kanal läßt zwar zu, daß alle überhaupt erreichbaren Mobilfunkteilnehmer oder Mobilfunkstationen diese Nachrichtensendung erhalten, diese Sendung wird jedoch nur von Mitgliedern einer gewünschten Gruppe gelesen, da sie für diese erfindungsgemäß gekennzeichnet ist.

In einer wesentlichen Weiterbildung wird eine Multicast-Gruppe durch zugefügten Kontrolldaten identifiziert, so daß die Mobilfunkstationen herausfinden, an welche Multicast-Gruppe ein bestimmtes Datenpaket gesendet wurde. Eine Kontrolle oder zusätzliche Überwachung der Datenflüsse ist damit in einfacher Weise realisiert und außerhalb der Mobilfunkstationen als Teilnehmer-Endgeräte nicht erforderlich.

Vorzugsweise wird unter Verwendung von UMTS oder eines ähnlichen Standards in einer Kontroll-Schicht MAC einer empfangenden Mobilfunkstation anhand eines Vergleichs zugefügter Kontrolldaten mit einer eigenen Multicast-Gruppen-Nummer nur bei einer Übereinstimmung der Nummern eine Weiterverarbeitung der empfangenen Daten veranlaßt. Damit werden in den Empfängern durch Verhinderung einer weiteren Aufbereitung von Informationen, die nicht für den jeweiligen Empfänger außerhalb einer bestimmten Gruppe bestimmt und somit auch i.d.R. nicht lesbar sind, Ressourcen geschont.

Die Kontrolldaten werden bevorzugt in einer Kontroll-Schicht des Versenders hinzugefügt. In einer bekannten mehrschichtigen Protokollarchitektur ist dies insbesondere wiederum die MAC-Schicht. Damit ist eine jeweilige Kontrollschicht in Sender und bei den Empfängern, hier die s.g. MAC-Schicht, mit der Aufgabe betraut, erfindungsgemäße Kontrolldaten zu verarbeiten, d.h. hinzuzufügen oder zu analysieren.,Dies ist besonders sinnvoll, da die MAC-Schicht bereits die Identifizierung von Mobilfunkgeräten bei Paketdaten-Übertragungen auf allgemeinen Kanälen zur Aufgabe hat. Sie kann daher ohne Probleme erfindungsgemäß erweitert werden.

Die Datenpakete für Multicast oder Enhanced Broadcast werden über den bereits vorhandenen Transportkanal übertragen, insbesondere den Transportkanal FACH unter Verwendung eines neuen logischen Kanals.

Alternativ werden die Datenpakete für Multicast oder Enhanced Broadcast über eine bereits verwendete oder in einem Datenübertragungssystem bekannte Kombination aus einem logischem Kanal, der auch auf einen Transportkanal FACH abgebildet wird, übertragen. Vorzugsweise wird der Logische Kanal und ein einem Standard gemäß zugeordneter Transport-Kanal, z.B. DTCH, dafür genutzt. In einer weiteren Ausführungsform werden die Datenpakete für Multicast oder Enhanced Broadcast über eine bereits verwendete Kombination von dem logischen Kanal DTCH, abgebildet auf einen Transportkanal DSCH übertragen.

In einer alternativen Ausführungsform werden die Datenpakete für Multicast oder Enhanced Broadcast über einen neuen Transportkanal übertragen, dem beispielsweise der Name MCH gegeben wird.

Besonders vorteilhafterweise wird das Verfahren nach dem UMTS-Standard ausgeführt. Damit wird ein kommendes Mobilfunksystem kompatibel zu einem soweit festgeschriebenen Standard mit ressourcen-sparenden Mechanismen ausgestattet. Als Anwendungen sind u.a. Werbesendungen, Benachrichtigungen aus Informationsgruppen bis hin zu einer Übertragung von Diensten, wie sie aus dem Broadcast-Bereich bekannt sind, auch unter UMTS nutzbar. Dann sind insbesondere auch Vorrichtungen in Form von Sende- und/oder Empfangseinheiten oder Kommunikationssysteme unter Nutzung der vorstehend genannten Vorteile realisierbar.

Die vorliegende Erfindung wird nachfolgend unter Bezugnahme auf die beigefügte Zeichnung anhand bevorzugter Ausführungsbeispiele erläutert.
- Fig. 1: zeigt eine Protokollarchitektur, wie sie momentan im Universal Mobile Telecommunication System UMTS spezifiziert ist, in einer skizzierten Darstellung;
- Fig. 2: stellt ein Datenpaket, welches von der MAC-Schicht im RNC über einen allgemeinen Transportkanal bzw. Forward Access Channel FACH an die physikalische Schicht weitergeleitet wird;
- Fig. 3: zeigt in skizzierter Form einen Netzwerkaufbau mit einer durch eine Basisstation aufgespannten Zelle und mehreren Mobilfunk-Teilnehmern, die unterschiedlichen Gruppen zugehören;
- Fig. 4: stellt analog zur der Darstellung von Fig. 1 eine Protokollkonfiguration der Komponenten des Netzaufbaus von Fig. 3 mit einer Mobilfunkstationen exemplarisch dar;
- Fig. 5: zeigt ein Datenpaket mit Kontrolldatenfeldern, und
- Fig. 6: stellt ein Datenpaket einer weiteren Ausführungsform der Erfindung mit Kontrolldatenfeldern dar.

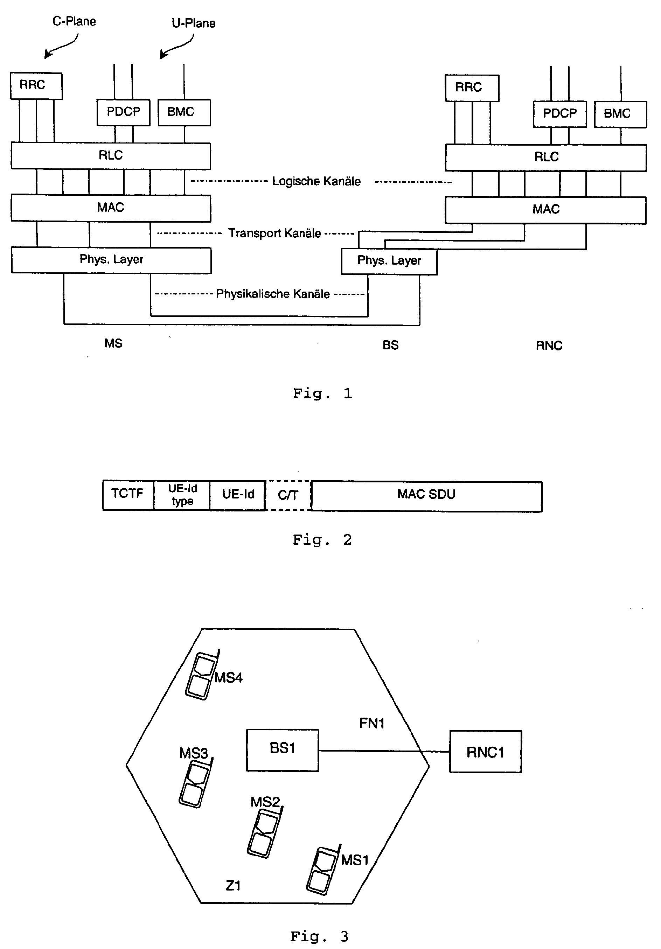

Die Abbildung von Fig. 1 zeigt eine Protokollarchitektur, wie sie momentan im Universal Mobile Telecommunication System UMTS spezifiziert ist, an dem Beispiel einer Übertragung von Daten von einem Funknetzwerk-Kontrolleinheit bzw. Radio Network Controller RNC über eine Basisstation BS hin zu einer Mobilfunkstation MS oder umgekehrt. Der Protokollstapel im UMTS ist in die Bitübertragungs-, die Sicherungs- und die Vermittlungsschicht unterteilt. Die Sicherungsschicht zerfällt in die Unterschichten Medium Access Control MAC, Radio Link Control RLC, Packet Data Convergence Protocol PDCP und Broadcast/Multicast Control. In vertikaler Richtung ist die Protokollarchitektur in zwei Ebenen unterteilt, die Kontrollebene bzw. Control-Plane C-Plane und die Nutz-Ebene, auch User-Plane bzw. U-Plane genannt. Dabei werden die Protokollschichten Physical Layer, Medium Access Control MAC und Radio Link Control RLC von beiden Ebenen genutzt. Die physikalische Schicht befindet sich in der Mobilfunkstation MS und netzwerkseitig in der Basisstation BS. Sie ist verantwortlich dafür, wie die Daten über die physikalischen Kanäle zwischen Netzwerk und Mobilfunkgerät MS gesendet werden. Unter anderem ist die physikalische Schicht verantwortlich für eine Fehlerschutz und das Multiplexen von logischen Transport-Kanälen auf die physikalischen Kanäle.

Die eigentliche Übertragung aller Daten erfolgt also über die sogenannten physikalischen Kanäle. Bei den physikalischen Kanälen wird zwischen allgemeinen und dedizierten Kanälen unterschieden. Die allgemeinen Kanäle können dabei gleichzeitig von mehreren Mobilfunkstationen genutzt werden, wohingegen auf den dedizierten Kanäle lediglich Daten für eine bestimmte Mobilfunkstation übertragen.

Oberhalb der physikalischen Schicht befindet sich die MAC Schicht. Netzwerkseitig befindet sich die MAC-Schicht in der Kontrolleinheit Radio Network Controller RNC des Funknetzwerks. Eine Aufgabe der MAC-Schicht ist es z.B. die logischen Kanäle oberhalb der MAC-Schicht auf die Transportkanäle unterhalb der MAC-Schicht zu multiplexen. Weiterhin ist die MAC-Schicht für die Identifizierung der Nutzer zuständig, falls Daten auf gemeinsam genutzten Kanälen gesendet werden. Über die Transportkanäle ist dann die physikalische Schicht mit der MAC-Schicht verbunden. Senderseitig leitet die MAC-Schicht dabei die Daten über diese Transportkanäle an die physikalische Schicht weiter, welche die Datenpakete über die physikalischen Kanäle versendet. Empfangsseitig werden die Datenpakete dann von der physikalischen Schicht über die Transportkanäle an die MAC-Schicht weitergeleitet.

Oberhalb der MAC-Schicht befindet sich die RLC-Schicht, deren Aufgabe u.a. die Segementierung oder Zusammenfassung von Paketdaten, Datenfluß-Kontrolle bzw. flow control und die Bereitstellung von automatischen Anfragen zur Wiederholung einer Übertragung bzw. Automatic Repeat Request- oder ARQ- Mechanismen ist. Die RLC-Schicht ist über logische Kanäle mit der MAC-Schicht verbunden. Die logischen Kanäle geben dabei an, welche Art der Daten transportiert werden sollen, wobei z.B. Kontroll- oder Nutzdaten unterschieden werden.

Oberhalb der RLC befindet sich nun in der Kontrollschicht C-Plane die sogenannte Radio Resource Control- bzw. RRC-Schicht, die z.B. für die Zuweisung von Ressourcen zuständig ist.

In der Nutz-Ebene U-Plane befinden sich oberhalb von RLC noch die Broadcast/Multicast-Control- bzw. BMC- und die Packet Data Convergence Protocol- bzw. PDCP-Schicht. Diese sind momentan parallel angeordnet. Die BMC-Schicht ist für die Kontrolle des Cell Broadcast Service- bzw. CBS-Dienstes zuständig. Die PDCP-Schicht ist unter anderem für die Kompression von Kontrolldaten zuständig, die sogenannte Header Compression.

Die Schichten RLC, RRC, PDCP und BMC sind für diese Erfindung nicht von Bedeutung. Sie sind nur zur vollständigen Darstellung des Schichtenmodells nach Fig. 1 angeführt worden und werden deshalb nicht weiter betrachtet.

Werden Paketdaten nach dem Stand der Technik über allgemeine Kanäle insbesondere von einem Netzwerk bzw. UMTS Terrestrial Radio Access Network, kurz UTRAN, an eine Mobilfunkstation gesendet, so fügt die MAC-Schicht im Radio Network Controller RNC dem Datenpaket Kontrolldaten hinzu. Anhand dieser Kontrolldaten kann die MAC-Schicht in einem Empfänger, also einer Mobilfunkstation, erkennen, ob die Datenpakete für sie bestimmt sind oder nicht. Die Abbildung von Fig. 2 zeigt ein Datenpaket, welches von der MAC-Schicht im RNC über einen allgemeinen Transportkanal bzw. Forward Access Channel FACH an die physikalische Schicht weitergeleitet wird wenn Daten über einen ausgewählten logischen Kanal bzw. Dedicated Traffic Channel DTCH vom RNC an ein bestimmtes Teilnehmer-Endgerät UE gesendet werden sollen.

Innerhalb der Kontrolldaten gibt ein TCTF-Feld an, welche Art von logischem Kanal die MAC-Schicht die Datenpakete empfangen hat, wenn diese über einen allgemeinen Transportkanal FACH weiter an die physikalische Schicht geleitet werden sollen. Tabelle 1 stellt die TCTF Werte für den allgemeinen Transportkanal FACH dar:

**Tabelle 1**

| **TCTF** | **Kennzeichnung** |
|---|---|
| 00 | BCCH |
| 01000000 | CCCH |
| 0100000101111111 | Reserviert (Paktetdaten-Einheiten mit dieser Kodierung werden bei dieser Version des Protokolls verworfen) |
| 10000000 | CTCH |
| 1000000110111111 | Reserviert (Paktetdaten-Einheiten mit dieser Kodierung werden bei dieser Version des Protokolls verworfen) |
| 11 | DCCH oder DTCH über FACH |

Mögliche logische Kanäle, die über FACH übertragen werden können sind demnach:
BCCH: Broadcast Control Channel
CCCH : Common Control Channel
DCCH: Dedicated Control Channel
DTCH: Dedicated Transport Channel
CTCH: Common Traffic Channel

Einige Werte des Feldes TCTF sind bisher noch nicht belegt. Ein in Fig. 2 ebenfalls dargestelltes C/T Feld wird zum Multiplexen/Demultiplexen verwendet, hat jedoch für die vorliegende Erfindung keine weitere Bedeutung.

Das Feld "UE-ID type" gibt an welche Identität zur Identifizierung der Mobilfunkstation verwendet wird. Grundsätzlich gibt dieses Feld also die Größe des "UE-ID" Feldes an. Das UE-ID type Feld besteht aus 2 bits, wobei 2 Werte bisher nicht belegt sind, wie Tabelle 2 zeigt:

**Tabelle 2**

| **UE-ID Typ 2 bit Feld** | **UE-Identifikationstyp** |
|---|---|
| 00 | U-RNTI |
| 01 | C-RNTI |
| 10 | Reserviert (Paktetdaten-Einheiten mit dieser Kodierung werden bei dieser Version des Protokolls verworfen) |
| 11 | Reserviert (Paktetdaten-Einheiten mit dieser Kodierung werden bei dieser Version des Protokolls verworfen) |

In dem Feld "UE-ID" wird die eigentlich Identität der Mobilfunkstation übertragen, für die die Daten übertragen werden. Ein Cell Radio Network Temporary Identifier C-RNTI und ein User Radio Network Temporary Identifier U-RNTI sind also die hier möglichen Arten von Identitäten der Mobilfunkstationen. C-RNTI hat dabei eine Länge von 16 bits, U-RNTI ist 32 bit lang.

Das Datenpaket wird nun über allgemeine physikalische Kanäle, wie z.B. den Secondary Common Control Physical Channel S-CCPCH, an alle Mobilfunkstationen innerhalb einer Zelle übertragen. Jede Mobilfunkstation gibt nun die Datenpakete über den allgemeinen Transportkanal FACH an die MAC-Schicht weiter. Die MAC-Schicht analysiert zunächst das Feld "UE-ID type" und ermittelt daraus welche Art der Mobilfunkstations-Identität verwendet wurde. Anschließend liest die MAC-Schicht aus dem Feld "UE-ID" die Identität der Mobilfunkstation aus, für die das Datenpaket bestimmt war. Die MAC-Schicht vergleicht diese Identität mit der eigenen Identität. Wenn die Identitäten übereinstimmen wird das Datenpaket über den entsprechenden logischen Kanal an die RLC-Schicht gegeben. Falls die Identitäten nicht übereinstimmen wird das Datenpaket verworfen und aus allen Speichern gelöscht.

Im Rahmen des vorstehend beschriebenen Verfahrens ist noch kein gebündelter Versand bzw. ein Versand von Nachrichten von einem Versender an eine definierte Gruppe von Empfängern möglich. Aktuell wird für das UMTS ein sogenannter Multicast-Dienst spezifiziert. Dabei können sich Nutzer über ihre Mobilfunkstation für eine bestimmte Gruppe anmelden. Sie bekommen dann Datenpakete zugesendet, die für diese Gruppe bestimmt sind. Um die Menge der Daten, die innerhalb einer Zelle gesendet werden, so gering wie möglich zu halten, ist es wünschenswert, die Pakete über einen gemeinsamen Kanal an alle Nutzer und/oder Mobilfunkstationen dieser Gruppe zu versendet. Dabei ist zu beachten, daß in einer Zelle mehrere unterschiedliche Gruppen angeboten werden können, jedoch nicht alle Nutzer und/oder Mobilfunkstationen in der Zelle allen Gruppen gleichzeitig angehören.

Für die vorliegende Erfindung wird im weiteren angenommen, daß Paketdaten für unterschiedliche Gruppen über den gleichen gemeinsamen physikalischen Kanal und Transportkanal übertragen werden sollen.

Kern der Erfindung ist das Hinzufügen von Kontrolldaten zu Paketdaten, die an Multicast-Gruppen gesendet werden. Die Kontrolldaten sollen erfindungsgemäß die Multicast-Gruppe identifizieren, um es so den Mobilfunkstationen zu ermöglichen, herauszufinden an welche Gruppe ein bestimmtes Datenpaket gesendet wurde.

Insbesondere soll gemäß einer Weiterbildung der vorliegenden Erfindung die MAC-Schicht diese Kontrolldaten hinzufügen. Dies ist besonders sinnvoll, da die MAC-Schicht bereits die Identifizierung von Mobilfunkgeräten bei Paketdaten-Übertragungen auf allgemeinen Kanälen zur Aufgabe hat, wie vorstehend beschrieben.

Nach Empfang eines Datenpakets, welches an eine Multicast-Gruppe gesendet wurde, wird erfindungsgemäß die Mobilfunkstationen an Hand der in der Kontrollinformation mitgesendeten Identifizierung der Multicast-Gruppe überprüfen, ob das Paket an eine Multicast-Gruppe gesendet wurde, zu der die Mobilfunkstation gehört. Falls die Mobilfunkstation nicht zu der entsprechenden Multicast-Gruppe gehört, soll die Mobilfunkstation erfindungsgemäß das Datenpaket löschen. Zur Entlastung der Empfänger wird eine Mobilfunkstation erfindungsgemäß nur dann das Datenpaket an die höhere Schicht RLC weiterleiten, wenn diese Mobilfunkstation zu der entsprechenden Multicast-Gruppe gehört.

Im Rahmen der vorliegenden Erfindung werden zur Umsetzung dieses Verfahrens grundsätzlich drei Fälle unterschieden:
1. Die Datenpakete für Multicast oder Enhanced Broadcast werden über den bereits vorhandenen Transportkanal FACH übertragen.
2. Die Datenpakete für Multicast oder Enhanced Broadcast werden über die bereits verwendete Kombination von logischem Kanal DTCH, abgebildet auf FACH oder die bereits verwendete Kombination von logischem Kanal DTCH, abgebildet auf DSCH übertragen.
3. Die Datenpakete für Multicast oder Enhanced Broadcast werden über einen bisher noch nicht existierenden Transportkanal MCH übertragen.

Zu Fall 1.:
Für dieses Ausführungsbeispiel wird angenommen, daß die Mobilfunkstationen MS1 und MS2 zu der Multicast-Gruppe A und die Mobilfunkstationen MS3 und MS4 zur Gruppe B gehören. Weiterhin wird angenommen, daß die Paketdaten für beide Gruppen über den selben allgemeinen physikalischen Kanal S-CCPCH übertragen werden und das die physikalische Schicht der Mobilfunkstationen, die Paketdaten über den allgemeinen Transportkanal FACH an die MAC-Schicht weiterleiten. Über den FACH können für diesen Fall auch Daten an einzelne Mobilfunkstationen gesendet werden.

Der Netzwerkaufbau ist in der Abbildung von Fig. 3 dargestellt. Die Kontrolleinheit RNC des Funknetzwerks ist über eine Festnetzverbindung FN1 mit einer Basisstation BS1 verbunden. Die Basisstation BS1 spannt eine Zelle Z1 auf, in der sich Mobilfunkstationen MS1-4 befinden. Die Mobilfunkstationen MS1-4 sind über den bereits genannten allgemeinen physikalischen Kanal S-CCPCH mit der Basisstation BS1 verbunden.

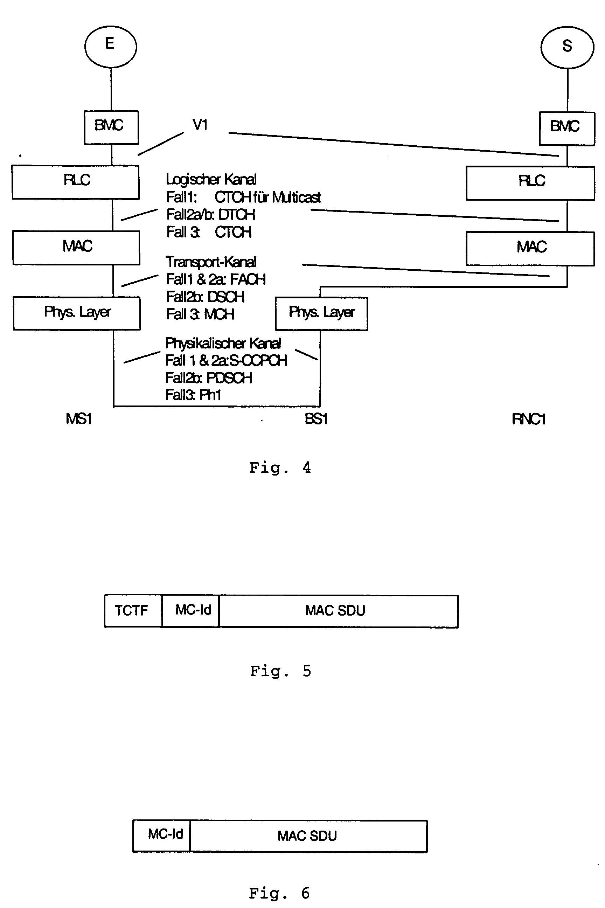

Es wird nun angenommen, daß ein Datenpaket an die Multicast-Gruppe A gesendet werden soll. In der Abbildung von Fig. 4 wird die Protokollkonfiguration von RNC1, BS1 und den Mobilfunkstationen gezeigt. Der Einfachheit halber wird lediglich MS1 dargestellt, da alle Mobilfunkstationen die gleiche Konfiguration haben. Das Datenpaket wird in RNC1 von der BMC-Schicht über eine Verbindung V1 an die darunter liegende Schicht RLC gegeben. Ein Paket, das eine Schicht von einer höheren Schicht empfängt, wird dabei im allgemeinen als Service Data Unit SDU bezeichnet. Hingegen wird ein Paket, das von einer Schicht an eine darunterliegende Schicht gegeben wird, im allgemeinen als Packet Data Unit PDU bezeichnet. Die RLC-Schicht bearbeitet die RLC-SDU eventuell bevor das Datenpaket als RLC-PDU über einen logischen Kanal zur Übertragung von Multicast-Nachrichten MC-CTCH1 an die MAC-Schicht weitergeleitet wird. Die RLC-PDU entspricht also der MAC-SDU. Die MAC-Schicht fügt nun der MAC-SDU erfindungsgemäß Kontrolldaten hinzu, mit deren Hilfe die Empfänger bestimmen können für welche Multicast-Gruppe das Datenpaket bestimmt ist.

Die MAC-PDU ist in der Abbildung von Fig. 5 dargestellt und besteht aus dem Paket, das die MAC-Schicht von der RLC-Schicht empfangen hat, also MAC-SDU, und Kontrolldatenfeldern "TCTF" und "MC-ID". Das TCTF-Feld gibt an von welcher Art von logischem Kanal die Daten übertragen werden. Gemäß der vorliegenden Erfindung soll der Wertebereich des TCTF-Feldes so erweitert werden, daß unterschieden werden kann ob der logische Kanal zur Übertragung von Multicast bzw. Enhanced Broadcast verwendet wird. In diesem Ausführungsbeispiel soll der TCTF auf "CTCH for Multicast" gesetzt werden. Auf Grund dieser Information erkennt die empfangende Mobilfunkstation später, welche Kontrolldaten zur MAC-SDU hinzugefügt wurden. Diese neue Eigenschaft ist besonders vorteilhaft, da auch Daten die über andere logische Kanäle über den selben Transportkanal FACH gesendet werden können. So können zum Beispiel Datenpakete gemäß Fig. 2, die über logische Kanäle wie dem DTCH oder DCCH an die MAC-Schicht weitergeleitet worden sind ebenfalls über den FACH gesendet werden. Welche Art von Kontrolldaten dabei zur MAC SDU hinzugefügt worden sind, können die empfangenden Mobilfunkstationen an Hand des TCTF Feldes erkennen.

Das "MC-ID" Feld enthält erfindungsgemäß die Information mit der die Multicast-Gruppe identifiziert werden kann. Falls es mehrere Möglichkeiten gibt die Multicast-Gruppe zu identifizieren, kann zusätzlich ein weiteres Feld "MC-ID type" hinzugefügt werden, welches die Art der Multicast-Gruppen-Identifizierung angibt. Dies kann z.B. sinnvoll sein, wenn eine Multicast-Gruppe entweder über eine UMTS spezifische Identität identifiziert werden kann oder alternativ ein Adressierung nach dem Internet Protokoll IP verwendet werden kann. Weiterhin kann das "MC-ID type" Feld erfindungsgemäß auch einfach die Länge des "MC-ID" Feldes angeben, z.B. wenn lediglich Daten für zwei Multicast-Gruppen über den gleichen allgemeinen physikalischen und Transportkanal übertragen werden, würde eine "MC-ID" Feld von 1 bit ausreichen, wohingegen, für drei oder vier Multicast-Gruppen ein "MC-ID" Feld der Länge 2 bit notwendig wäre usw..

Für dieses Ausführungsbeispiel wird im folgenden davon ausgegangen, daß das "MC-ID" Feld immer die gleiche Länge hat und lediglich eine Art von Identifizierung gibt und das Feld "MC-ID type" somit nicht verwendet wird. Es ist daher auch nicht in der Abbildung von Fig. 5 dargestellt.

Die MC-PDU wird nun über den allgemeinen Transportkanal FACH zur Übertragung von Multicast an die physikalische Schicht weitergeleitet, welche das Datenpaket über den allgemeinen physikalischen Kanal S-CCPCH an die Multifunkstationen MS1-MS4 sendet. Jede der 4 Mobilfunkstationen empfängt das Datenpaket auf dem allgemeinen physikalischen Kanal und gibt das Paket über den allgemeinen Transportkanal FACH an die MAC-Schicht weiter, wie es in der Abbildung von Fig. 5 dargestellt ist. Die MAC-Schicht der Mobilfunkstationen entnimmt nun aus dem Feld TCTF, daß die Daten über einen CTCH zur Übertragung von Multicast-Daten an RLC weitergeleitet werden müssen, und erkennt erfindungsgemäß daraus, daß dem TCTF Feld das "MC-ID" Feld folgt. Die MAC-Schicht entnimmt dem Feld "MC-ID" die Multicast-Gruppe an die dieses Paket gesendet wurde und vergleicht es mit der in der Mobilfunkstation gespeicherten Multicast-Gruppen-Identität.

Die Mobilfunkstationen MS1 und MS2 gehören zur Multicast-Gruppe A, an die das Datenpaket auch gesendet worden ist. MS1 und MS2 wurde die Multicast-Gruppen-Identität für die Multicast-Gruppe A beim anmelden an die Multicast-Gruppe A bzw. falls die Multicast-Gruppen-Identität auf bestimmte Bereiche (z.B. eine Anzahl von Zellen) beschränkt ist, beim Eintritt in den entsprechenden Bereich, bekannt gemacht. Gleiches gilt für MS3 und MS4, denen jedoch die Identität für die Multicast-Gruppe B bekannt gemacht worden ist. MS1-4 vergleichen nun erfindungsgemäß die im Datenpaket enthaltene Multicast-Gruppen-Identität mit der gespeicherten Identität. MS1 und MS2 stellen fest, daß es sich um die gleiche Identität handelt und entfernen das MC-ID Feld bevor die MAC-SDU über den logischen Kanal MC-CTCH1 an die RLC-Schicht weitergegeben wird. MS3 und MS4 stellen fest, daß die im Datenpaket enthaltene Multicast-Gruppen-Identität nicht mit der gespeicherten übereinstimmt und löschen erfindungsgemäß das Datenpaket anstatt es an die RLC-Schicht weiterzuleiten. Die RLC-Schicht en in MS1 und MS2 geben anschließend das Datenpaket über die Verbindung V1 an die BMC-Schicht weiter, welche es schließlich an die höheren Schichten weiterleitet

Zu Fall 2.
Es wird wiederum angenommen, daß die Mobilfunkstationen MS1 und MS2 zu der Multicast-Gruppe A gehören und die Mobilfunkstationen MS3 und MS4 zur Gruppe B gehören. Nun werden bei Nutzung des logischen Kanals DTCH zwei Varianten untersucht:
Für Variante a) dieses Ausführungsbeispiels wird angenommen, daß die Paketdaten für beide Gruppen über den selben, allgemeinen physikalischen Kanal S-CCPCH1 übertragen werden und das die physikalische Schicht der Mobilfunkstationen, die Paketdaten über den allgemeinen Transportkanal FACH1 an die MAC-Schicht weiterleiten. Hier ist es möglich Daten z.B. auch an einzelne Mobilfunkstationen zu senden.
Für Variante b) dieses Ausführungsbeispiels wird angenommen, daß die Paketdaten für beide Gruppen über den selben, allgemeinen physikalischen Kanal bzw. Physical Downlink Shared Channel PDSCH übertragen werden und das die physikalische Schicht der Mobilfunkstationen, die Paketdaten über den allgemeinen Transportkanal bzw. Downlink Shared Channel DSCH an die MAC-Schicht weiterleiten. Auch in diesem Fall ist es möglich Daten z.B. auch an einzelne Mobilfunkstationen zu senden.

Der Netzwerkaufbau ist in der Abbildung von Fig. 3 dargestellt. Die Funknetzwerk Kontrolleinheit RNC ist über eine Festnetzverbindung FN1 mit der Basisstation BS1 verbunden, welche die Zelle Z1 aufspannt, in der sich die Mobilfunkstationen MS1-4 befinden. Die Mobilfunkstationen MS1-4 sind nach der Variante a) über den bereits genannten allgemeinen physikalischen Kanal S-CCPCH oder nach der Variante b) über den physikalischen Kanal PDSCH mit der Basisstation BS1 verbunden.

Es wird nun angenommen, daß ein Datenpaket an die Multicast-Gruppe A gesendet werden soll. In Fig. 4 wird die Protokoll Konfiguration von RNC1, BS1 und den Mobilfunkstationen gezeigt. Da alle Mobilfunkstationen die gleiche Konfiguration haben wird der Einfachheit halber lediglich MS1 dargestellt. Das Datenpaket wird in RNC1 von der BMC-Schicht über eine Verbindung V1 an die darunter liegende Schicht RLC gegeben. Die RLC-Schicht bearbeitet die RLC-SDU nun eventuell wieder bevor das Datenpaket als RLC-PDU über den logischen Kanal Dedicated Traffic Channel DTCH an die MAC-Schicht weitergeleitet wird. Fig. 2 zeigt die MAC PDU, wie sie an die physikalische Schicht weitergeleitet wird, wenn der DTCH auf den allgemeinen Transportkanal FACH abgebildet wird. Für den Fall daß der DTCH auf den DSCH abgebildet wird ist das Feld "TCTF" nicht vorhanden, da lediglich DTCH und DCCHs auf diesem Transportkanal übertragen werden für die die MAC PDU immer gleich aussieht.

Erfindungsgemäß wurde der Wertebereich des Feldes "UE-ID type" um einen weiteren Wert "MC-ID" erweitert, der angibt, daß es sich bei der Adresse im "UE-ID" Feld nicht um eine Identität einer Mobilfunkstation handelt, sondern um eine Identifikation einer Multicast-Gruppe. Das Feld "UE-ID type" wird nun auf diesen neuen Wert gesetzt und in das Feld "UE-ID" wird eine Identifikation für die Multicast-Gruppe A eingetragen.

Nur bei Variante a) gibt das TCTF Feld wie bisher an, daß es sich bei dem logischen Kanal, über den die MAC-Schicht das Datenpaket erhalten hat, um einen DTCH handelt. Das C/T Feld wird in diesem Ausführungsbeispiel nicht verwendet, da davon ausgegangen wird, daß lediglich ein logischer Kanal auf den FACH bzw. DSCH abgebildet wird und somit keine Multiplex- Informationen notwendig sind.

Falls es mehrere Möglichkeiten zur Identifikation der Multicast-Gruppe gibt könnte auch der zweite noch nicht belegte Wert des Feldes UE-ID type zusätzlich verwendet werden.

Für dieses Ausführungsbeispiel wird im folgenden jedoch davon ausgegangen, daß lediglich ein Wert verwendet wird. Die MC-PDU wird nun in Variante a) über den allgemeinen Transportkanal FACH, in Variante b) über den DSCH zur Übertragung von Multicast an die physikalische Schicht weitergeleitet, welche das Datenpaket über den allgemeinen physikalischen Kanal S-CCPCH an die Mobilfunkstationen MS1-MS4 sendet. Jede der vier Mobilfunkstationen empfängt das Datenpaket auf dem allgemeinen physikalischen Kanal und gibt das Paket über den allgemeinen Transportkanal FACH bzw. DSCH an die MAC-Schicht weiter, wie es in der Abbildung von Fig. 2 dargestellt ist. Für Variante a) entnimmt die MAC-Schicht der Mobilfunkstationen nun aus dem Feld TCTF, daß die Daten über einen DTCH zur Übertragung von Multicast-Daten an RLC weitergeleitet werden müssen, und erkennt daraus, daß dem TCTF Feld das "UE-ID type" Feld folgt. Für Variante b) ist der MAC-Schicht der Mobilfunkstation bekannt, daß die MAC PDU mit dem Feld "UE-ID type" beginnt.

Die MAC-Schicht stellt durch das Feld UE-ID type fest, daß das Feld "UE-ID" eine Identifikation einer Multicast-Gruppe enthält. Die MAC-Schicht entnimmt dem Feld "UE-ID" nun die Multicast-Gruppe, an die dieses Paket gesendet wurde. Dann vergleicht die MAC-Schicht den Feldwert mit der in der Mobilfunkstation gespeicherten Multicast-Gruppen-Identität. Die Mobilfunkstationen MS1 und MS2 gehören zur Multicast-Gruppe A, an die das Datenpaket auch gesendet worden ist. MS1 und MS2 wurde die Multicast-Gruppen-Identität für die Multicast-Gruppe A beim Anmelden an die Multicast-Gruppe A oder, falls die Multicast-Gruppen-Identität auf bestimmte Bereiche (z.B. eine Anzahl von Zellen) beschränkt ist, beim Eintritt in den entsprechenden Bereich, bekannt gemacht. Gleiches gilt für MS3 und MS4, denen jedoch die Identität für die Multicast-Gruppe B bekannt gemacht worden ist. MS1-4 vergleichen nun erfindungsgemäß die im Datenpaket enthaltene Multicast-Gruppen-Identität mit der eigenen gespeicherten Identität. MS1 und MS2 stellen fest, daß es sich um die gleiche Identität handelt und entfernen sämtliche Kontrolldaten bevor die MAC-SDU über den logischen Kanal DTCH an die RLC-Schicht weitergegeben wird. MS3 und MS4 stellen fest, daß die im Datenpaket enthaltene Multicast-Gruppen-Identität nicht mit der gespeicherten übereinstimmt. Erfindungsgemäß löschen MS3 und MS4 das Datenpaket, anstatt es an die höhere RLC-Schicht weiterzuleiten.

Die RLC-Schichten in MS1 und MS2 geben anschließend das Datenpaket über die Verbindung V1 an die BMC-Schicht weiter, welche es schließlich an die höheren Schichten weiterleitet

Zu Fall 3.
Auch für dieses Ausführungsbeispiel wird wiederum angenommen, daß die Mobilfunkstationen MS1 und MS2 zu der Multicast-Gruppe A gehören und die Mobilfunkstationen MS3 und MS4 zur Gruppe B gehören. Weiterhin wird angenommen, daß die Paketdaten für beide Gruppen über den selben, allgemeinen physikalischen Kanal Ph1 übertragen werden und daß die physikalische Schicht der Mobilfunkstationen, die Paketdaten über einen bisher noch nicht existierenden allgemeinen Transportkanal an die MAC-Schicht weiterleiten. In diesem Fall soll die Konfiguration des allgemeinen physikalischen Kanals und des Transportkanals nur denjenigen Mobilfunkstationen bekannt gemacht werden, die zu einer oder mehreren Multicast-Gruppen gehören. Mobilfunkstationen, die nicht zu mindestens einer Multicast-Gruppe gehören, empfangen die Datenpakete für Multicast-Gruppen somit nicht.

Der Netzwerkaufbau ist gleich dem der vorherigen Fälle. Die Mobilfunkstationen MS1-4 sind über den bereits genannten allgemeinen physikalischen Kanal Ph1 mit der Basisstation BS1 verbunden. Es wird nun ferner angenommen, daß ein Datenpaket an die Multicast-Gruppe A gesendet werden soll. In Fig. 4 wird die Protokoll-Konfiguration von RNC1, BS1 und den Mobilfunkstationen gezeigt. Da alle Mobilfunkstationen die gleiche Konfiguration haben wird der Einfachheit halber lediglich MS1 dargestellt.

Das Datenpaket wird in RNC1 von der BMC-Schicht über eine Verbindung V1 an die darunter liegende Schicht RLC gegeben. Die RLC-Schicht bearbeitet die RLC-SDU eventuell bevor das Datenpaket als RLC-PDU über einen logischen Kanal, in diesem Ausführungsbeispiel dem CTCH, an die MAC-Schicht weitergeleitet wird. Die RLC-PDU entspricht also der MAC-SDU. Die MAC-Schicht fügt nun der MAC-SDU erfindungsgemäß Kontrolldaten hinzu, mit deren Hilfe die Empfänger bestimmen können für welche Multicast-Gruppe das Datenpaket bestimmt ist. Die MAC-PDU ist in der Abbildung von Fig. 6 dargestellt und besteht aus dem Paket, das die MAC-Schicht von der RLC-Schicht empfangen hat, MAC-SDU, und dem Kontrolldatenfeld "MC-ID". Das Kontrolldatenfeld "MC-ID" enthält die Information, mit der die Multicast-Gruppe identifiziert werden kann.

Falls es. mehrere Möglichkeiten zur Identifikation der Multicast-Gruppe gibt, kann auch hier wieder zusätzlich ein weiteres Feld "MC-ID type" hinzugefügt werden. Für dieses Ausführungsbeispiel wird im folgenden jedoch wieder davon ausgegangen, daß das "MC-ID" Feld immer die gleiche Länge hat und lediglich eine Art von Identifizierung gibt und das Feld "MC-ID type" somit nicht verwendet wird. Da für diesen Fall ein neuer Transportkanal zur Übertragung von Muticast-Datenpaketen verwendet wird, auf den lediglich der CTCH abgebildet wird, ist es nicht notwendig den logischen Kanal z.B. mit dem TCTF Feld zu identifizieren.

Die MC-PDU wird nun über einen allgemeinen Kanal zur Übertragung von Multicast-Datenpaketen, in diesem Ausführungsbeispiel Multicast-Channel MCH genannt, an die physikalische Schicht weitergeleitet, die das Datenpaket über den allgemeinen physikalischen Kanal Ph1 an die Multifunkstationen MS1-MS4 sendet. Jede der vier Mobilfunkstationen empfängt das Datenpaket auf dem allgemeinen physikalischen Kanal und gibt das Paket wie in der Abbildung von Fig. 6 dargestellt über den allgemeinen Transportkanal MCH ist an die MAC-Schicht weiter.

Die MAC-Schicht der Mobilfunkstationen entnimmt nun aus dem Feld MC-ID die Multicast-Gruppe an die dieses Paket gesendet wurde und vergleicht es mit der in der Mobilfunkstation gespeicherten Multicast-Gruppen-Identität. Die Mobilfunkstationen MS1 und MS2 gehören zur Multicast-Gruppe A, an die das Datenpaket auch gesendet worden ist. MS1 und MS2 wurde die Multicast-Gruppen-Identität für die Multicast-Gruppe A beim anmelden an die Multicast-Gruppe A bzw. falls die Multicast-Gruppen-Identität auf bestimmte Bereiche (z.B. eine Anzahl von Zellen) beschränkt ist, beim Eintritt in den entsprechenden Bereich, bekannt gemacht. Gleiches gilt für MS3 und MS4, denen jedoch die Identität für die Multicast-Gruppe B bekannt gemacht worden ist.

Die Mobilfunkstationen MS1-4 vergleichen nun erfindungsgemäß die im Datenpaket enthaltene Multicast-Gruppen-Identität mit der gespeicherten Identität. MS1 und MS2 stellen fest, daß es sich um die gleiche Identität handelt und entfernen das MC-ID Feld bevor die MAC-SDU über den logischen Kanal CTCH an die RLC-Schicht weitergegeben wird. MS3 und MS4 stellen fest, daß die im Datenpaket enthaltene Multicast-Gruppen-Identität nicht mit der gespeicherten übereinstimmt und löschen erfindungsgemäß das Datenpaket anstatt es an die RLC-Schicht weiterzuleiten. Die RLC Schichten in MS1 und MS2 geben anschließend das Datenpaket über die Verbindung V1 an die BMC-Schicht weiter, welche es schließlich an die höheren Schichten weiterleitet.

Bezugszeichenliste / Abkürzungsliste
- UMTS: Universal Mobile Telecommunication System
- WAP: Wireless Application Protocol
- GSM: Global System for Mobile Communication
- MM: Multimedianachricht (Multimedia Message)
- MMS: Multimedia Messaging Service
- MAC: Medium Access Control
- RLC: Radio Link Control
- RNC: Funknetzwerk-Kontrolleinheit/Radio Network Controller
- V1: Verbindung zwischen BMC-Schicht der darunter liegenden Schicht RLC
- ARQ: Automatic Repeat Request
- RRC: Radio Resource Control
- C-Plane: Kontrollebene / Control-Plane
- BC: Broadcast
- MC: Multicast
- BCH: Broadcast Channel
- BMC: Broadcast/Multicast Control
- PDCP: Packet Data Convergence Protocol
- U-Plane: Nutz-Ebene / User-Plane
- CBC: Cell Broadcast Center
- CBS: Cell Broadcast Service
- UTRAN: UMTS Terrestrial Radio Access Network
- RNC: Radio Network Controller
- FACH: allgemeiner Transportkanal / Forward Access Channel
- DTCH: logischer Kanal / Dedicated Traffic Channel
- DSCH: allgemeinen Transportkanal / Downlink Shared Channel
- PDSCH: Physical Downlink Shared Channel
- TCTF: Angabe zur Art des übertragenden Kanals / Target Channel Type Field
- BCCH: Broadcast Control Channel (nur einer vorhanden)
- CCCH: Common Control Channel (nur einer vorhanden)
- DCCH: Dedicated Control Channel
- DTCH: logischer Kanal / Dedicated Transport Channel
- CTCH: Common Traffic Channel (nur einer vorhanden)
- C-RNTI: Cell Radio Network Temporary Identifier
- U-RNTI: User Radio Network Temporary Identifier
- S-CCPCH: Secondary Common Control Physical Channel
- C/T: Mux-Feld, zum logischen Kanalmultiplex genutzt
- SDU: Service Data Unit
- PDU: Packet Data Unit
- MCH: Multicast Channel (neuer und daher bislang ungenutzter Transport-Kanal)
- UE: Teilnehmer-Endgerät / User Equipment
- MS1: Mobilfunkstation 1
- MS2: Mobilfunkstation 2
- A: Multicast Gruppe
- MS3: Mobilfunkstation
- MS4: Mobilfunkstation
- B: Multicast Gruppe
- FN1: Festnetzverbindung
- BS1: Basisstation
- Z1: Zelle
- Ph1: allgemeiner physikalischer Kanal

## Patentansprüche

1. Verfahren zur Übertragung von Daten von einem Versender an mehrere Empfänger in einem System mit einer mehrschichtigen Protokollarchitektur, in der die Daten zur Organisation in Datenpakete aus Kopfdaten und Nutzdaten aufgeteilt werden,
**dadurch gekennzeichnet,**
**daß** die Übertragung von Daten in Form einer Punkt-zu-Mehrpunkt-Übertragung über einen allgemeinen Kanal insbesondere in einem Mobilfunksystem durchgeführt wird, indem zu Paketdaten, die an Multicast-Gruppen gesendet werden, Kontrolldaten zur Identifizierung einer bestimmten Multicast-Gruppe hinzugefügt werden.

2. Verfahren nach Anspruch 1,
**dadurch gekennzeichnet,**
**daß** die zugefügten Kontrolldaten eine Multicast-Gruppe identifizieren, um es so den Mobilfunkstationen (MS) zu erkennen zu ermöglich an welche Multicast-Gruppe ein bestimmtes Datenpaket gesendet wurde.

3. Verfahren nach einem der vorhergehenden Ansprüche,
**dadurch gekennzeichnet,**
**daß** in einer MAC-Schicht einer empfangenden Mobilfunkstation (MS) anhand eines Vergleichs zugefügter Kontrolldaten mit einer eigenen Multicast-Gruppen-Nummer nur bei einer Übereinstimmung der Nummern eine Weiterverarbeitung der empfangenen Daten veranlaßt wird.

4. Verfahren nach einem der vorhergehenden Ansprüche,
**dadurch gekennzeichnet,**
**daß** die Kontrolldaten in einer Kontroll-Schicht des Versenders hinzugefügt werden, insbesondere in einer Kontroll-Schicht (MAC).

5. Verfahren nach einem der vorhergehenden Ansprüche,
**dadurch gekennzeichnet,**
**daß** die Datenpakete für Multicast oder Enhanced Broadcast über einen bereits vorhandenen Transportkanal übertragen werden, insbesondere über den Transportkanal FACH unter Verwendung eines neuen logischen Kanals.

6. Verfahren nach einem der vorhergehenden Ansprüche,
**dadurch gekennzeichnet,**
**daß** die Datenpakete für Multicast oder Enhanced Broadcast über eine bereits verwendete Kombination aus einem logischen Kanal DTCH, abgebildet auf den Transportkanal FACH übertragen werden.

7. Verfahren nach einem der vorhergehenden Ansprüche 1 bis 5,
**dadurch gekennzeichnet,**
**daß** die Datenpakete für Multicast oder Enhanced Broadcast über die bereits verwendete Kombination von logischem Kanal DTCH, der auf einen Transportkanal DSCH abgebildet wird, übertragen werden.

8. Verfahren nach einem der vorhergehenden Ansprüche,
**dadurch gekennzeichnet,**
**daß** die Datenpakete für Multicast oder Enhanced Broadcast über einen neuen Transportkanal übertragen werden, vorzugsweise dem Transportkanal MCH.

9. Verfahren nach einem der vorhergehenden Ansprüche,
**dadurch gekennzeichnet,**
**daß** das Verfahren nach dem UMTS-Standard ausgeführt wird.

10. Sende- und/oder Empfangseinheit, die zur mobilen Übertragung von Daten in ein Festnetz und/oder auf eine andere mobile Sende- und/oder Empfangseinheit ausgebildet ist,
**dadurch gekennzeichnet,**
**daß** die Sende- und/oder Empfangseinheit als Mobilstation (MS) zur Umsetzung eines Verfahrens nach einem der vorhergehenden Ansprüche ausgebildet ist.

11. Kommunikationssystem,
**dadurch gekennzeichnet,**
**daß** es zur Umsetzung eines Verfahrens nach einem der vorhergehenden Ansprüche 1 bis 9 ausgebildet und/oder unter Verwendung einer Sende- und/oder Empfangseinheit nach dem vorhergehenden Anspruch aufgebaut ist.
